# FASCICULE DE BREVET EUROPEEN

(11) **EP 4 323 629 B1**
(45) Date de publication et mention de la délivrance du brevet: **03.09.2025**
(21) Numéro de dépôt: 22720479.9
(22) Date de dépôt: 11.04.2022
(51) Int. Cl.: F02C 7/24, B32B 15/04, F02C 7/045, F02K 1/82

(54) **PANNEAU ACOUSTIQUE POUR TURBOMACHINE**
AKUSTIKPLATTE FÜR TURBINENMOTOR
ACOUSTIC PANEL FOR TURBINE ENGINE

(30) Priorité: 12.04.2021 FR 2103763
(43) Date de publication de la demande: 21.02.2024
(73) Titulaire: Safran Nacelles, 76700 Gonfreville-l'Orcher (FR)
(72) Inventeur: VERSAEVEL, Marc, 77550 MOISSY-CRAMAYEL (FR); DESJOYEAUX, Bertrand Léon Marie, 77550 MOISSY-CRAMAYEL (FR); GINI, Pierre-Yves, 77550 MOISSY-CRAMAYEL (FR)
(74) Mandataire: Ernest Gutmann - Yves Plasseraud S.A.S.
(86) Numéro de dépôt international: PCT/FR2022/050676
(87) Numéro de publication internationale: WO 2022/219274

(56) Documents cités:
- WO-A1-2019/043344
- FR-A1- 2 815 900

## Description

### Domaine technique

La présente divulgation se rapporte à un panneau acoustique pour turbomachine. Elle se rapporte également à une nacelle de turbomachine comprenant un tel panneau acoustique.

### Technique antérieure

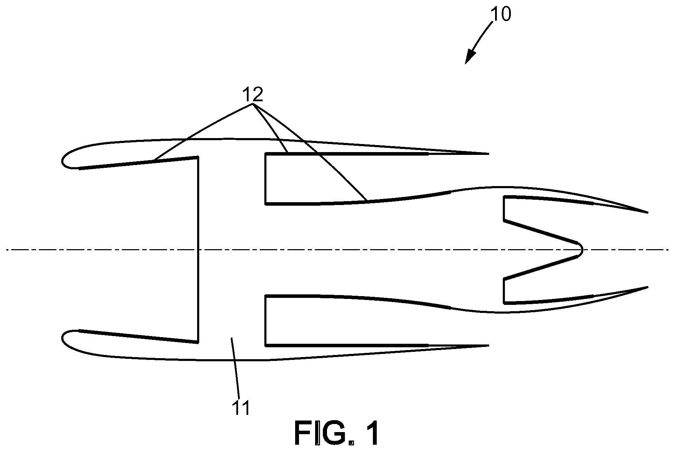

Telle que représentée en figure 1, une turbomachine 10 comprend classiquement une nacelle 11 dans laquelle est logé un moteur ou un turboréacteur. La nacelle d'une turbomachine est couramment équipée d'un panneau acoustique 12 pour limiter le niveau de bruit émis par le moteur ou le turboréacteur.

Un tel panneau acoustique 12 absorbe le bruit selon le principe de résonateur de Helmholtz. A cet effet, le panneau acoustique comporte généralement une paroi acoustique avant perforée pour permettre le passage des ondes sonores, une paroi arrière et une structure cellulaire, comprenant une pluralité de cellules, qui est interposée entre la paroi avant et la paroi arrière.

Chaque cellule s'étend entre la paroi arrière et la paroi acoustique avant selon une direction principale de propagation des ondes sonores. La dimension des cellules entre la paroi acoustique avant et la paroi arrière, dans la direction principale, permet de déterminer la fréquence des ondes sonores pour laquelle l'atténuation acoustique est maximale. Typiquement, l'atténuation acoustique est maximale pour les ondes sonores dont la longueur d'onde est égale ou proche de quatre fois la dimension de la cellule dans la direction principale (la longueur étant inversement proportionnelle à la fréquence des ondes sonores). En revanche, l'atténuation acoustique est nulle pour les ondes sonores dont la longueur d'onde est égale ou proche de la dimension de la cellule dans la direction principale.

Les turbomachines actuelles tendent vers une géométrie de plus grand diamètre, avec des éléments rotatifs, comme la soufflante, qui sont plus lents et qui produisent donc un bruit ayant une fréquence plus basse. Ainsi, il existe un besoin d'augmenter la dimension des cellules, dans la direction principale, pour que celles-ci permettent une atténuation acoustique de bruits ayant une fréquence plus basse.

Toutefois, la nacelle des turbomachines tend à devenir plus courte et plus mince de manière à limiter la trainée. Les panneaux acoustiques équipant la nacelle doivent donc présenter une épaisseur réduite ce qui limite le dimensionnement des cellules pour atténuer efficacement les basses fréquences.

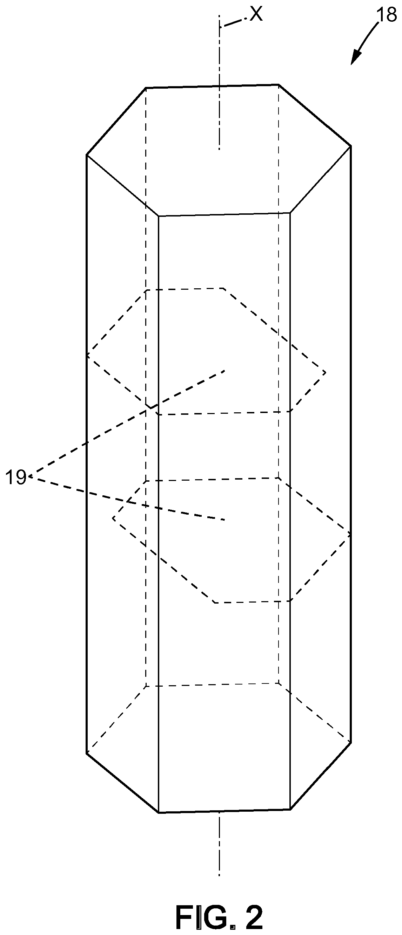

Pour résoudre cet inconvénient, il est connu de disposer des obstacles 19 s'étendant à l'intérieur de chaque cellule 18 de manière transversale à la direction principale X comme représenté à la figure 2. Les ondes sonores se propagent alors dans la cellule suivant une trajectoire en « S » ce qui allonge la distance parcourue par les ondes sonores dans la cellule 18. Ainsi, pour une dimension de cellule donnée dans la direction principale X, une telle cellule 18 permet une atténuation acoustique d'ondes sonores ayant une fréquence plus basse. L'épaisseur d'un panneau acoustique 12 comprenant de telles cellules 18 peut ainsi être réduite tout en permettant une atténuation des bruits de basse fréquence.

Un panneau acoustique 12 comprenant de tels cellules 18 est généralement réalisé par un empilement de plaques prédécoupées, pliées, liées entre elles et qui ont été expansées sous l'effet d'une charge de compression appliquée à l'empilement. De tels les panneaux acoustiques12 ne donnent pas satisfaction en ce que leur fabrication est complexe et en ce que les obstacles à l'intérieur des cellules ne présentent pas une géométrie uniforme. Le document WO2019/043344 divulgue un panneau acoustique selon l'art antérieur.

### Résumé

La présente divulgation vient améliorer la situation.

Il est proposé un panneau acoustique pour turbomachine, le panneau acoustique comprenant au moins :
- un premier feuillard et un deuxième feuillard ondulés comprenant chacun une alternance, selon une première direction, de premières crêtes et secondes crêtes reliées par des flancs, ledit premier feuillard et ledit deuxième feuillard étant rapportés l'un par rapport à l'autre selon une deuxième direction transverse à la première direction, de sorte à former une pluralité de cellules qui sont chacune délimitée, dans la deuxième direction, par une première crête du premier feuillard et une première crête du deuxième feuillard, chaque cellule s'étendant selon une troisième direction transverse à la première direction et à la deuxième direction,
- un troisième feuillard intercalé, dans la deuxième direction, entre le premier feuillard et le deuxième feuillard, le troisième feuillard comprenant une première paroi latérale en appui, dans la deuxième direction, sur le premier feuillard, le troisième feuillard comprenant en outre au moins une languette qui s'étend à l'intérieur de l'une des cellules, au moins en partie transversalement à la troisième direction de la cellule associée, ladite au moins une languette étant reliée, à un premier bord d'extrémité dans la deuxième direction, à la première paroi latérale, ladite au moins une languette délimitant tout ou partie d'un passage dans la troisième direction à l'intérieur de la cellule associée.

**Les** ondes sonores se propagent à l'intérieur de la cellule dans la troisième direction. Autrement dit, la troisième direction est une direction de propagation des ondes sonores à l'intérieur de la cellule. La première languette forme ainsi un obstacle à la propagation d'ondes sonores dans la cellule, ces dernières étant contraintes de se propager par le passage délimité par la première languette. La distance parcourue par les ondes sonores à l'intérieur de la cellule associée est alors augmentée. Ainsi, on diminue la dimension du panneau acoustique dans la troisième dimension en conservant une atténuation acoustique des basses fréquences En outre, un tel panneau peut être fabriqué à partir de feuillards préformés et ne nécessite pas l'application de contraintes sur les feuillards pour former chaque obstacle à l'intérieur d'une cellule. Un tel panneau acoustique présente donc l'avantage d'être facile et rapide à fabriquer.

La première paroi latérale peut être fixée au premier feuillard et/ou au deuxième feuillard, notamment par un adhésif. Ladite au moins une languette peut être reliée à la première paroi latérale par une ligne de pliage. Aussi, le positionnement correct et la fixation du troisième feuillard relativement au premier feuillard et au deuxième feuillard est simple à mettre en œuvre et permet une géométrie identique des obstacles pour toutes les cellules du panneau acoustique. Ladite au moins une languette peut s'étendre perpendiculairement à la première paroi latérale. Le premier feuillard et le deuxième feuillard peuvent former la pluralité de cellules dans la première direction. Le troisième feuillard peut présenter une dimension, dans la première direction, qui est similaire aux dimensions du premier feuillard et du deuxième feuillard dans la première direction.

La première direction et la deuxième direction peuvent être coplanaires. La deuxième direction peut être perpendiculaire à la première direction. La troisième direction peut être perpendiculaire à la première direction et/ou à la deuxième direction. La deuxième direction peut être une direction normale aux crêtes du premier feuillard et du deuxième feuillard.

Le passage peut être délimité par un bord libre de la languette et l'une parmi la première crête du premier feuillard et la première crête du deuxième feuillard délimitant la cellule associée.

Le passage peut être délimité, dans la deuxième direction, par un bord libre de la languette et l'une parmi la première crête du premier feuillard et la première crête du deuxième feuillard délimitant la cellule associée.

Chaque cellule peut présenter une section transversale à la troisième direction associée qui est hexagonale, et dans lequel ladite au moins une languette comprend une partie centrale qui s'étend, dans la deuxième direction, entre les premières crêtes du premier feuillard du deuxième feuillard qui délimitent la cellule associée, et deux parties latérales qui s'étendent chacune, dans la deuxième direction, entre des flancs du premier feuillard et du deuxième feuillard en vis-à-vis dans la deuxième direction qui délimitent la cellule associée.

Ainsi, lorsque chaque cellule présente une section transversale à la troisième direction associée qui est hexagonale, on assure que la languette s'étend sur toute la section transversale de la cellule associée, à l'exception du passage délimité par la languette.

La partie centrale de la languette peut s'étendre transversalement à la troisième direction de la cellule associée. Les parties latérales de la languette peuvent chacune s'étendre de manière oblique par rapport à la troisième direction de la cellule associée.

Chaque partie latérale peut être reliée à la partie centrale par une ligne de pliage.

Le passage peut être une ouverture à contours fermés formée dans la languette. Un second bord d'extrémité de la languette, dans la deuxième direction, peut être jointif avec la première crête du deuxième feuillard délimitant la cellule associée.

**La** première paroi latérale du troisième feuillard peut comprendre une alternance, dans la première direction, de premières crêtes et de secondes crêtes reliées par des flancs, chaque première crête et seconde crête de la première paroi latérale étant respectivement en appui dans la deuxième direction sur l'une des premières crêtes et l'une des secondes crêtes du premier feuillard. Autrement dit, la première paroi latérale peut être rapportée de façon complémentaire au premier feuillard.

Chaque première crête et seconde crête de la première paroi latérale peut être reliée à l'un des flancs adjacents par une ligne de pliage.

Le troisième feuillard peut comprendre en outre une seconde paroi latérale en appui, selon la deuxième direction, sur le deuxième feuillard, ladite au moins une languette étant reliée, à un second bord d'extrémité dans la deuxième direction, à la seconde paroi latérale.

La seconde paroi latérale peut être fixée au deuxième feuillard, notamment par un adhésif.

La seconde paroi latérale du troisième feuillard peut comprendre une alternance, dans la première direction, de premières crêtes et de secondes crêtes reliées par des flancs. Chaque première crête et seconde crête de la seconde paroi latérale peut être respectivement en appui dans la deuxième direction sur l'une des premières crêtes et l'une des secondes crêtes du deuxième feuillard. La seconde paroi latérale peut être rapportée de façon complémentaire au deuxième feuillard.

Chaque première crête et seconde crête de la seconde paroi latérale peut être reliée à l'un des flancs adjacents par une ligne de pliage.

Chaque seconde crête de la première paroi latérale du troisième feuillard, et le cas échéant chaque seconde crête de la seconde paroi latérale du troisième feuillard, peut être serrée dans la deuxième direction entre l'une des secondes crêtes du premier feuillard et l'une des secondes crêtes du deuxième feuillard.

Le troisième feuillard peut comprendre une pluralité de languettes décalées l'une de l'autre dans la troisième direction de la cellule associée, et dans lequel les passages délimités en tout ou partie par une première languette et une seconde languette consécutives dans la troisième direction sont décalés l'un de l'autre dans une direction transverse à la troisième direction de la cellule associée.

Le troisième feuillard comprend une première languette et une seconde languette qui sont décalées l'une de l'autre dans la troisième direction de la cellule associée, le passage délimité en tout ou partie par la première languette et le passage délimité en tout ou partie par la seconde languette étant décalés l'un par rapport à l'autre dans une direction transverse à la troisième direction de la cellule associée. La trajectoire de propagation des ondes sonores dans la cellule forme ainsi une chicane ou un « S » de manière à augmenter la distance parcourue par les ondes sonores dans la cellule.

La seconde paroi latérale peut comprendre une première portion reliée à la première languette et une seconde portion reliée à la seconde languette, la première portion et la seconde portion de la seconde paroi latérale étant discontinues.

Le troisième feuillard peut comprendre au moins une languette associée à chaque cellule formée par le premier feuillard et le deuxième feuillard.

Le panneau acoustique peut comprendre en outre au moins un septum acoustiquement perméable qui s'étend à l'intérieur de l'une des cellules, transversalement à la troisième direction de la cellule associée. Le septum peut s'étendre à l'intérieur du passage délimité en tout ou partie par ladite au moins une languette. Le septum permet de diviser la cellule associée en deux étages dans la troisième direction. Le septum peut être une membrane multi-perforée pour permettre une communication acoustique entre les étages. Un tel septum permet une absorption acoustique sur une plage de fréquence plus large. Un tel panneau acoustique est généralement communément appelé panneau acoustique à deux étage (ou encore « DDOF », de l'anglais « Double Degree Of Freedom ») en opposition à un panneau acoustique à simple étage (« ou encore « SDOF », de l'anglais « Single Degree Of Freedom »).

Le premier feuillard, le deuxième feuillard et/ou le troisième feuillard peuvent être réalisés en un matériau métallique, tel que l'aluminium, ou en un matériau thermodurcissable.

Le premier feuillard et/ou le deuxième feuillard peuvent être obtenus par emboutissage. Le troisième feuillard peut être obtenu par pliage.

Selon un autre aspect il est décrit une nacelle de turbomachine comprenant au moins panneau acoustique tel que décrit ci-avant.

Selon un autre aspect, il est décrit un procédé de fabrication d'un panneau acoustique tel que décrit ci-avant, le procédé comprenant les étapes :
i fournir le premier feuillard et le deuxième feuillard ondulés comprenant chacun une pluralité de premières crêtes et de secondes crêtes reliées par des flancs,
ii fournir le troisième feuillard,
iii positionner la première paroi latérale du troisième feuillard en appui sur le premier feuillard selon la deuxième direction,
iv rapporter le deuxième feuillard au premier feuillard pour former la pluralité de cellules, avec le troisième feuillard intercalé, dans la deuxième direction, entre le premier feuillard et le deuxième feuillard, ladite au moins une languette s'étendant à l'intérieur de l'une des cellules.

L'étape i peut comprendre les étapes subsidiaires suivantes :
a1 fournir un premier feuillard et un deuxième feuillard ayant chacun une forme plane,
b1 former le premier feuillard et le deuxième feuillard de sorte à ce qu'ils présentent chacun une forme ondulée avec une alternance de premières crêtes et de secondes crêtes reliées par des flancs.

L'étape b1 peut être réalisée par emboutissage. La forme ondulée du premier feuillard et du deuxième feuillard peut être obtenue en passant le premier feuillard et le deuxième feuillard entre deux rouleaux crantés.

L'étape i peut comprendre en outre une étape c1 consistant à chauffer le premier feuillard et le deuxième feuillard, notamment lorsque ceux-ci sont réalisés en un matériau thermodurcissable. Le premier feuillard et le deuxième feuillard peuvent chacun être chauffés jusqu'à un état de stabilisation dans lequel ils sont rigides.

Le procédé de fabrication peut comprendre en outre une étape v consistant à chauffer le panneau acoustique, notamment lorsque le premier feuillard, le deuxième feuillard et le troisième feuillard sont réalisés dans un matériau thermodurcissable. Le chauffage des feuillards permet une polymérisation permettant la fixation des feuillards entre eux. L'étape v peut être réalisée avec les feuillards disposés sur un outillage présentant une courbure de manière à conférer une courbure aux feuillards.

**Le** procédé peut comprendre une étape ii' consistant à déposer une couche d'adhésif de chaque côté du troisième feuillard dans la deuxième direction. L'étape ii' peut être réalisée entre l'étape ii et l'étape iii.

Alternativement, l'étape v peut consister réticuler chaque couche d'adhésif, notamment en chauffant le panneau acoustique.

L'étape ii peut comporter les étapes subsidiaires :
a2 fournir un troisième feuillard ayant une forme plane,
b2 former les lignes de pliage délimitant chaque première crête et deuxième crête de la première paroi latérale et de la seconde paroi latérale du troisième feuillard,
c2 former au moins une paire de lignes de pliage sur le troisième feuillard, chaque ligne de pliage de ladite paire délimitant l'un des bords d'extrémité dans la deuxième direction de ladite au moins une languette, les lignes de pliage de ladite paire étant jointes au niveau de chaque première crête de la première paroi latérale et de la seconde paroi latérale,
d2 faire une découpe dans le troisième feuillard formant le passage délimité en tout ou partie par ladite au moins une languette,
e2 plier la première paroi latérale et la seconde paroi latérale de sorte à de sorte à ce qu'elles présentent chacune une forme ondulée avec une alternance de premières crêtes et de secondes crêtes reliées par des flancs,
f2 plier ladite au moins une languette par rapport à la première paroi latérale,
g2 plier la seconde paroi latérale par rapport à ladite au moins une languette et à la première partie latérale de sorte à ce que chaque secondes crêtes de la seconde paroi latérale soit en regard de l'une des secondes crêtes de la première paroi latérale.

Le cas échéant, l'étape c2 peut consister en outre à former la ligne de pliage entre la partie centrale de ladite au moins une languette et chaque partie latérale.

L'étape d2 peut être réalisée par laser.

Les étapes e2, g2 et f2 peuvent être réalisées par une plieuse, notamment une plieuse de type manuelle ou automatique. Ladite au moins une languette peut notamment être pliée à 90° par rapport à la première paroi latérale lors de l'étape f2.

L'étape ii peut comprendre en outre une étape h2 consistant à chauffer le troisième feuillard, notamment lorsque celui-ci est réalisé en un matériau thermodurcissable. Le troisième feuillard peut être chauffé jusqu'à un état de stabilisation dans lequel il est rigide.

### Brève description des dessins

D'autres caractéristiques, détails et avantages apparaîtront à la lecture de la description détaillée ci-après, et à l'analyse des dessins annexés, sur lesquels :
Figure 1 est une schématique partielle en coupe axiale d'une turbomachine de l'art antérieur ;
Figure 2 est une schématique partielle en perspective d'une cellule de panneau acoustique de l'art antérieur ;
Figure 3 est une vue schématique partielle d'un panneau acoustique selon la description ;
Figure 4 est une vue schématique partielle en coupe du panneau acoustique de la figure 3 ;
Figure 5 est une vue schématique en perspective du troisième feuillard du panneau acoustique de la figure 3 ;
Figure 6 est un schéma fonctionnel du procédé de fabrication du panneau acoustique de la figure 3 ;
Figure 7 est un schéma fonctionnel d'un sous-procédé mis en œuvre lors d'une étape du procédé de la figure 8 ;
Figure 8 est une vue schématique en perspective du troisième feuillard du panneau acoustique de la figure 5 avant pliage ;
Figure 9 comprend les figures 9A et 9B illustrant des différentes configurations du troisième feuillard du panneau acoustique de la figure 5 en cours de pliage.

### Description des modes de réalisation

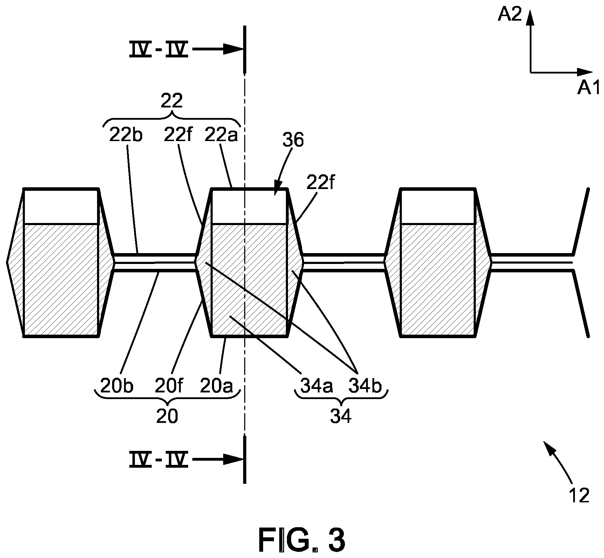

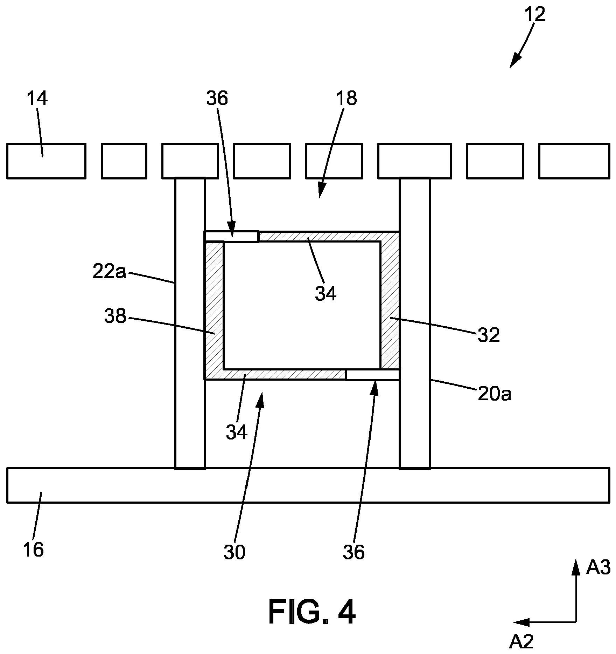

Il est maintenant fait référence aux figures 3 et 4 qui représentent un panneau acoustique 12 pour une turbomachine. Le panneau acoustique 12 peut notamment équiper une nacelle de turbomachine. Le panneau acoustique 12 comprend ici une paroi avant acoustique 14 et une paroi arrière 16, chacune étant visible à la figure 4. La paroi avant acoustique 14 et la paroi arrière 16 sont parallèles entre elles. La paroi avant et la paroi arrière sont espacées et en regard l'une de l'autre dans une direction principale du panneau acoustique. La direction principale du panneau acoustique est prise dans la direction de l'épaisseur du panneau acoustique. La paroi acoustique avant 14 est multi-perforée de manière à être acoustiquement perméable.

Le panneau acoustique comprend un premier feuillard 20 et un deuxième feuillard 22 disposés entre la paroi avant 14 et la paroi arrière 16. Le premier feuillard 20 et le deuxième feuillard 22 s'étendent ici chacun dans la direction principale du panneau acoustique 12. Le premier feuillard 20 et le deuxième feuillard 22 sont chacun ondulés. Le premier feuillard 20 et le deuxième feuillard 22 comprennent chacun une alternance, selon une première direction A1, de premières crêtes 20a, 22a et secondes crêtes 20b, 22b reliées par des flancs 20f, 22f. La première direction A1 peut être transverse à la direction principale du panneau acoustique. La première direction A1 est ici perpendiculaire à la direction principale du panneau acoustique.

Le premier feuillard 20 et le deuxième feuillard 22 sont rapportés l'un par rapport à l'autre selon une deuxième direction A2 transverse à la première direction A1, de sorte à former une pluralité de cellules 18. Le premier feuillard 20 et le deuxième feuillard 22 forment la pluralité de cellules 18 dans la première direction A1. Autrement dit, le premier feuillard 20 et le deuxième feuillard 22 forment une rangée de cellules 18 dans la première direction A1. La première direction A1 et la deuxième direction A2 sont coplanaires. La deuxième direction A2 est ici perpendiculaire à la première direction A1. La deuxième direction A2 est une direction normale à chaque crête 20a, 20b, 22a, 22b du premier feuillard 20 et du deuxième feuillard 22.

Chaque cellule 18 est délimitée dans la direction principale du panneau acoustique 12 par la paroi arrière 16 et la paroi avant 14. Chaque cellule 18 est délimitée, dans la deuxième direction A2, par une première crête 20a du premier feuillard 20 et une première crête 22a du deuxième feuillard 22. Chaque cellule 18 s'étend selon une troisième direction A3 associée qui est transverse à la première direction A1 et à la deuxième direction A2. Les ondes sonores se propagent à l'intérieur de chaque cellule selon la troisième direction A3 associée. Autrement dit, la troisième direction A3 de chaque cellule 18 est une direction de propagation des ondes sonores à l'intérieur de la cellule 18. La troisième direction A3 est ici perpendiculaire à la première direction A1 et à la deuxième direction A2. Aussi, la troisième direction A3 associée à chaque cellule 18 coïncide avec la direction principale du panneau acoustique 12. Chaque cellule 18 présente une section transversale à la troisième direction A3 associée qui est hexagonale.

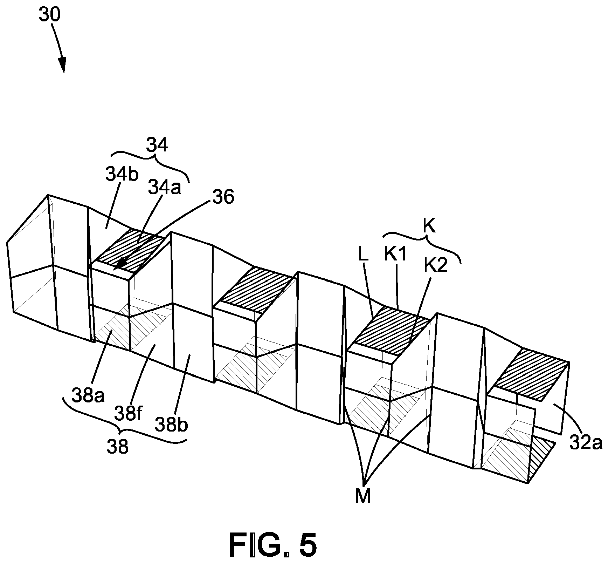

Le panneau acoustique 12 comprend en outre un troisième feuillard 30 plus particulièrement visible aux figures 5, 8 et 9. Le troisième feuillard 30 est intercalé, dans la deuxième direction A2, entre le premier feuillard 20 et le deuxième feuillard 22. Le troisième feuillard 30 peut présenter une dimension, dans la première direction A1, qui sont similaires aux dimensions du premier feuillard 20 et du deuxième feuillard 22 dans la première direction A1.

Le troisième feuillard 30 comprend une première paroi latérale 32 en appui, dans la deuxième direction A2, sur le premier feuillard 20. La première paroi latérale 32 du troisième feuillard 30 comprend une alternance, dans la première direction, de premières crêtes 32a et de secondes crêtes 32b reliées par des flancs 32f. Chaque première crête 32a et seconde crête 32b de la première paroi latérale 32 est respectivement en appui dans la deuxième direction A2 sur l'une des premières crêtes 20a et l'une des secondes crêtes 20b du premier feuillard 20. Autrement dit, la première paroi latérale 32 coopère par complémentarité de forme avec le premier feuillard 20. Chaque première crête 32a et seconde crête 32b de la première paroi latérale 32 est ici reliée à l'un des flancs 32f adjacents par une ligne de pliage J. La première paroi latérale 32 du troisième feuillard 30 est fixée au premier feuillard 20, par exemple au moyen d'un adhésif.

Le troisième feuillard 30 comprend en outre une première languette 34 et une seconde languette 34. La première languette 34 et la seconde languette 34 s'étendent à l'intérieur de l'une des cellules 18, au moins en partie transversalement à la troisième direction A3 de la cellule 18 associée. Chaque languette 34 est reliée, à un premier bord d'extrémité dans la deuxième direction A2, à la première paroi latérale 32. Chaque languette 34 est ici reliée à la première paroi latérale 32 par une ligne de pliage K1. Chaque languette 34 peut s'étendre perpendiculaire à la première paroi latérale 32.

La première languette 34 et la seconde languette 34 sont décalées l'une de l'autre dans la troisième direction A3 de la cellule associée. A cet effet, la première languette 34 est reliée à une première extrémité de la première paroi latérale 32 selon la troisième direction A3. La seconde languette 34 est reliée à une seconde extrémité de la première paroi latérale 32 selon la troisième direction A3. Le troisième feuillard 30 peut comprendre une pluralité de premières languettes 34 et une pluralité de secondes languettes 34, une première languette 34 et une seconde languette 34 étant associée à chaque cellule formée par le premier feuillard 20 et le deuxième feuillard 22.

Chaque languette 34 délimite tout ou partie d'un passage 36 dans la troisième direction A3 à l'intérieur de la cellule 18 associée. La première languette 34 forme un obstacle à la propagation d'ondes sonores dans la cellule 18. Les ondes sonores sont contraintes de se propager par le passage 36 délimité en tout ou partie par la première languette 34. La distance parcourue par les ondes sonores à l'intérieur de la cellule 18 associée est alors augmentée. Ainsi, atténue des ondes sonores ayant une fréquence plus basse en conservant un panneau acoustique 12 de faible épaisseur.

En particulier, le passage 36 délimité, en tout ou partie, par la première languette 34 et le passage 36 délimité, en tout ou partie, par la seconde languette 34 sont décalés l'un par rapport à l'autre dans la deuxième direction A2 à la troisième direction A3 de la cellule 18 associée. La trajectoire de propagation des ondes sonores dans la cellule forme ainsi une chicane ou un « S » de manière à augmenter encore la distance parcourue par les ondes sonores dans la cellule 18.

Chaque passage 36 est ici délimité, dans la deuxième direction A2, par un bord libre de la languette 34 associée et l'une parmi la première crête 20a du premier feuillard 20 et la première crête 22a du deuxième feuillard 22 délimitant la cellule 18 associée. En particulier, le passage 36 délimité par la première languette 34 est ici délimité, dans la deuxième direction A2, par un bord libre de la première languette 34 et la première crête 22a du deuxième feuillard 22. De même, le passage 36 délimité par la seconde languette 34 est ici délimité, dans la deuxième direction A2, par un bord libre de la seconde languette 34 et la première crête 20a du premier feuillard 20.

Chaque languette 34 comprend une partie centrale 34a qui s'étend, dans la deuxième direction A2, entre les premières crêtes20a, 22a du premier feuillard 20 et du deuxième feuillard 22 qui délimitent la cellule 18 associée. La partie centrale 34a de la languette 34 s'étend transversalement à la troisième direction A3 de la cellule 18 associée. Chaque languette 34 comprend également deux parties latérales 34b de chaque côté de la partie centrale 34a dans la première direction A1. Chaque partie latérale 34b s'étend, dans la deuxième direction A2, entre des flancs 20f, 22f du premier feuillard 20 et du deuxième feuillard 22 en vis-à-vis dans la deuxième direction A2 et qui délimitent la cellule 18 associée. Les parties latérales 34b de la languette 34 s'étendent chacune de manière oblique par rapport à la troisième direction A3 de la cellule 18 associée. Chaque partie latérale 34b est ici reliée à la partie centrale 34a par une ligne de pliage L. Ainsi, lorsque chaque cellule 18 présente une section transversale à la troisième direction A3 associée qui est hexagonale, on assure que la languette 34 s'étend sur toute la section transversale de la cellule 18 associée pour former un obstacle à la propagation des ondes sonores, à l'exception du passage 36 délimité par la languette 34.

Le troisième feuillard 30 comprend en outre une seconde paroi latérale 38 en appui, selon la deuxième direction A2, sur le deuxième feuillard 22. La seconde paroi latérale 38 du troisième feuillard 30 comprend une alternance, dans la première direction A1, de premières crêtes 38a et de secondes crêtes 38b reliées par des flancs 38f. Chaque première crête 38a et seconde crête 38b de la seconde paroi latérale 38 est respectivement en appui, dans la deuxième direction A2, sur l'une des premières crêtes 22a et l'une des secondes crêtes 22b du deuxième feuillard 22. Autrement dit, la seconde paroi latérale 38 coopère par complémentarité de forme avec le deuxième feuillard 22. Chaque première crête 38a et seconde crête 38b de la seconde paroi latérale 38 est ici reliée à l'un des flancs adjacents par une ligne de pliage M. La seconde paroi latérale 38 du troisième feuillard 38 est fixée au deuxième feuillard 22, par exemple au moyen d'un adhésif.

**Chaque** seconde crête 38b de la seconde paroi latérale 38 est en appui, dans la deuxième direction A2, contre l'une des secondes crêtes 32b de la première paroi latérale 32. Chaque seconde crête 32b de la première paroi latérale 32 du troisième feuillard 30, et chaque seconde crête 38b de la seconde paroi latérale 38 du troisième feuillard 30 est serrée, dans la deuxième direction A2, entre l'une des secondes crêtes 20b du premier feuillard 20 et l'une des secondes crêtes 22b du deuxième feuillard 22.

Chacune de la première languette 34 et seconde languette 34 est reliée, à un second bord d'extrémité, dans la deuxième direction A2, à la seconde paroi latérale 38. La première languette 34 est reliée à une première extrémité de la seconde paroi latérale 38 selon la troisième direction A3. La seconde languette 34 est reliée à une seconde extrémité de la seconde paroi latérale 38 selon la troisième direction A3. Chacune de la première languette 34 et seconde languette 34 est ici reliée à la seconde paroi latérale 38 par une ligne de pliage K2. La seconde paroi latérale 38 comprend ici une première portion reliée à la première languette 34 et une seconde portion reliée à la seconde languette 34, la première portion et la seconde portion de la seconde paroi latérale 38 étant discontinues.

Le panneau acoustique peut comprendre en outre au moins un septum acoustiquement perméable qui s'étend à l'intérieur de la cellule 18, transversalement à la troisième direction A3 associée. Un septum peut notamment s'étendre à l'intérieur du passage 36 délimité en tout ou partie par chaque languette 34.

Le premier feuillard 20, le deuxième feuillard 22 et/ou le troisième feuillard 30 peuvent être réalisés en un matériau métallique, tel que l'aluminium. Alternativement, le premier feuillard 20, le deuxième feuillard 22 et/ou le troisième feuillard 30 peuvent être réalisés en un matériau thermodurcissable. Selon un exemple particulier, le premier feuillard 20 et le deuxième feuillard 22 sont réalisés en un matériau métallique et le troisième feuillard 30 est réalisé en un matériau thermodurcissable. Selon un autre exemple particulier, le premier feuillard 20, le deuxième feuillard 22 et le troisième feuillard 30 sont tous réalisés en un matériau thermodurcissable.

Comme il sera vu plus en détail ci-après, le premier feuillard 20, le deuxième feuillard 22 et le troisième feuillard 30 sont préformés avant d'être assemblés pour former le panneau acoustique. Le premier feuillard 20 et le deuxième feuillard 22 peuvent être obtenus par emboutissage. Le troisième feuillard 30 peut être obtenu par pliage. Un tel panneau peut ainsi être fabriqué à partir de feuillards préformés et ne nécessite pas l'application de charges de compression sur les feuillards pour former chaque obstacle à l'intérieur d'une cellule. Un tel panneau acoustique 12 présente donc l'avantage d'être facile et rapide à fabriquer. Aussi, le positionnement correct de chaque obstacle à l'intérieur de l'une des cellules est plus simple mettre en œuvre.

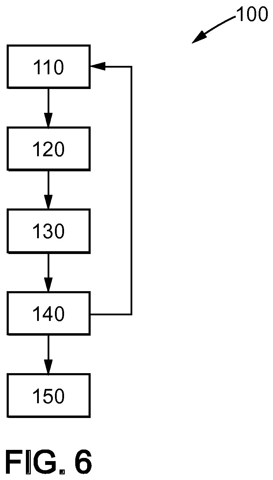

La figure 6 représente un schéma fonctionnel d'un procédé 100 de fabrication du panneau acoustique 12 tel que décrit ci-avant.

Le procédé 100 comprend une première étape 110 consistant à fournir le premier feuillard 20 et le deuxième feuillard 22 ondulés comprenant chacun une pluralité de premières crêtes 20a, 22a et de secondes crêtes 20b, 22b reliées par des flancs. La première étape 110 peut comprendre une première sous-étape subsidiaire consistant à fournir un premier feuillard 20 et un deuxième feuillard 22 ayant chacun une forme plane. La première étape peut comprendre une deuxième sous-étape subsidiaire consistant à former le premier feuillard 20 et le deuxième feuillard 22 de sorte à ce qu'ils présentent chacun une forme ondulée avec une alternance de premières crêtes 20a, 22a et de secondes crêtes 20b, 22b reliées par des flancs 20f, 22f. La deuxième sous-étape subsidiaire peut être réalisée par emboutissage. En d'autres termes, la forme ondulée du premier feuillard 20 et du deuxième feuillard 22 peut être obtenue en passant le premier feuillard 20 et le deuxième feuillard 22 entre deux rouleaux crantés. La première étape 110 peut comprendre une troisième sous-étape subsidiaire consistant à chauffer le premier feuillard 20 et le deuxième feuillard 22, notamment lorsque ceux-ci sont réalisés en un matériau thermodurcissable. Le premier feuillard 20 et le deuxième feuillard 22 peuvent, notamment, chacun être chauffé jusqu'à un état de stabilisation dans lequel ils sont rigides.

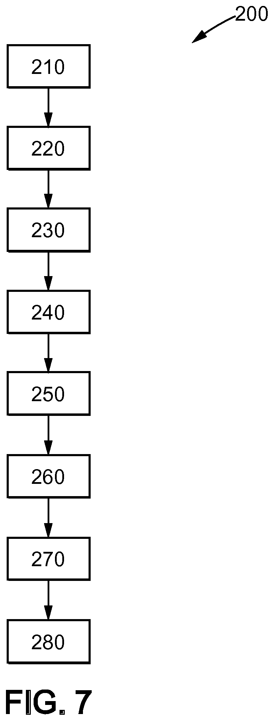

Le procédé 100 comprend une deuxième étape 120 consistant à fournir le troisième feuillard 30. La figure 7 représente un schéma fonctionnel d'un sous-procédé 200 mis en œuvre lors de la deuxième étape 120.

Le sous-procédé 200 comprend une première étape 210 consistant à fournir un troisième feuillard 30 ayant une forme plane.

Le sous-procédé comprend une deuxième étape 220 consistant à former les lignes de pliage J, M délimitant chaque première crête 32a, 38a et seconde crête 32b, 32b de la première paroi latérale 32 et de la seconde paroi latérale 38 du troisième feuillard 30.

**Le** sous-procédé comprend une troisième étape 230 consistant à former une paire K de lignes de pliage K1, K2 sur le troisième feuillard 30, chaque paire K de lignes de pliages K1, K2 étant associée à une série de languettes 34 destinées à s'étendre chacune dans l'une des cellules formées par le premier feuillard 20 et le deuxième feuillard 22. Dans l'exemple représenté, deux paires K de lignes de pliage K1, K2 sont formées, l'une des paires K étant associée à une série de premières languettes 34 et l'autre paire K étant associée à une série de secondes languettes 34.

Chaque ligne de pliage K1, K2 de l'une des paires K délimite, dans la deuxième direction A2, l'un des bords d'extrémité de chaque languette 34 de la série de languettes 34 associée. Les lignes de pliage K1, K2 de chaque paire K étant jointes au niveau de chaque première crête 32a, 38a de la première paroi latérale 32 et de la seconde paroi latérale 38.

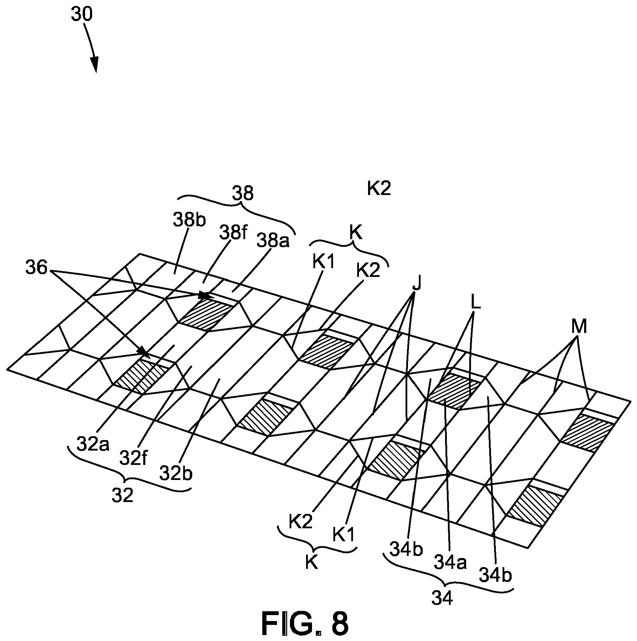

Lorsque le troisième feuillard 30 présente une forme plane comme visible à la figure 8, la première paroi latérale 32 est agencée entre les deux paires K de lignes de pliage K1, K2. Aussi, la première portion de la seconde paroi latérale 38 est disposée d'un côté de la paire de lignes de pliage K1, K2 associée à la série de premières languettes 34, qui est opposée à la première paroi latérale 32. De même, la seconde portion de la seconde paroi latérale 38 est disposée d'un côté de la paire de lignes de pliage associée à la série de secondes languettes 34, qui est opposé à la première paroi latérale 32. De manière remarquable, la première portion et la seconde portion de la seconde paroi latérale 38 sont agencées à des bords d'extrémités opposés du troisième feuillard 30 dans une configuration plane.

Lors de la troisième sous-étape 230 du sous-procédé 200, la ligne de pliage L entre chaque partie latérale 34b et la partie centrale 34a de chaque languette 34 est aussi formée.

Le sous-procédé 200 comprend une quatrième étape 240 consistant à faire une pluralité de découpes dans le troisième feuillard 30, chaque découpe formant le passage 36 délimité en partie par chaque languette 34. La quatrième étape 240 du sous-procédé 200 peut être réalisée par laser par exemple.

Le sous-procédé 200 comprend une cinquième étape 250 consistant à plier la première paroi latérale 32 et la seconde paroi latérale 38 de sorte à ce qu'elles présentent chacune une forme ondulée avec une alternance de premières crêtes 32a, 38a et de secondes crêtes 32b, 38b reliées par des flancs 32f, 38f.

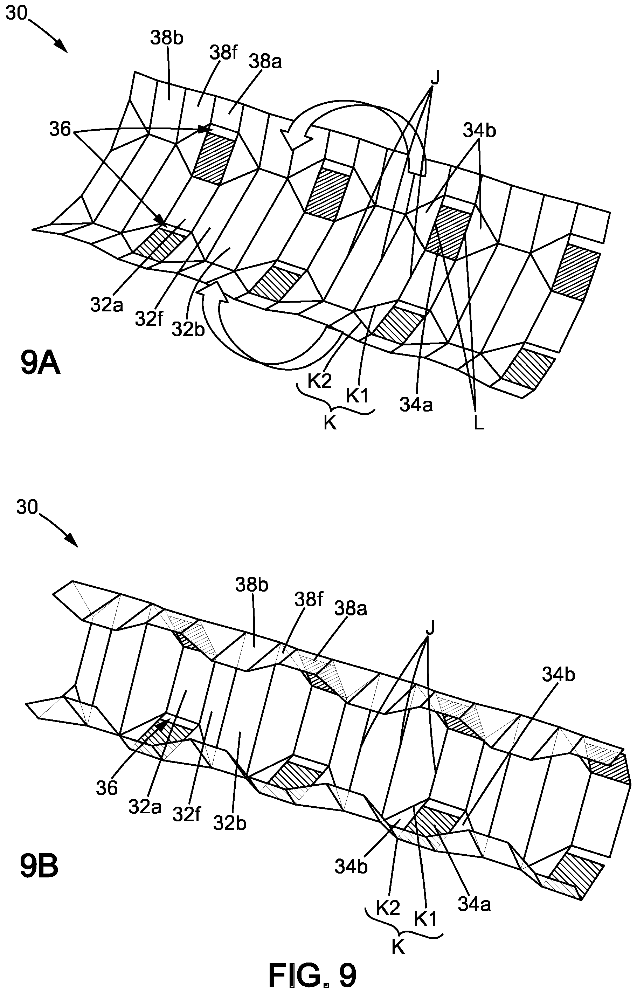

Le sous-procédé 200 comprend une sixième étape 260, représentée à la figure 9A, consistant à plier chaque languette 34 par rapport à la première paroi latérale 32. Chaque languette 34 peut notamment être pliée à 90° par rapport à la première paroi latérale 32.

Le sous-procédé 200 comprend une septième étape 270, représentée à la figure 9B, consistant à plier la première portion de la seconde paroi latérale 38 par rapport à chaque première languette 34 et la seconde portion de la seconde paroi latérale 38 par rapport à chaque seconde languette 34 de sorte que chaque secondes crêtes 38b de la seconde paroi latérale 38 soit amenée en regard de l'une des secondes crêtes 32b de la première paroi latérale 32.

La sixième étape 260 et la septième étape 270 peuvent être réalisées simultanément.

La cinquième étape 250, la sixième étape 260 et la septième étape 280 du sous-procédé 200 peuvent être réalisées par une plieuse, notamment une plieuse de type manuelle ou automatique.

**Le** sous-procédé 200 comprend une huitième étape 280 consistant à chauffer le troisième feuillard 30, notamment lorsque celui-ci est réalisé en un matériau thermodurcissable. Le troisième feuillard 30 peut être chauffé jusque dans un état de stabilisation dans lequel il est rigide.

Le procédé 100 comprend une troisième étape 130 consistant à positionner la première paroi latérale 32 du troisième feuillard 30 en appui sur le premier feuillard 20 selon la deuxième direction A2.

Le procédé 100 comprend une quatrième étape 140 consistant à rapporter le deuxième feuillard 22 au premier feuillard 20 pour former une rangée de cellules 18 dans la première direction A1, avec le troisième feuillard 30 intercalé, dans la deuxième direction A2, entre le premier feuillard 20 et le deuxième feuillard 22, chaque languette 34 du troisième feuillard 30 s'étendant à l'intérieur de l'une des cellules 18.

**La** première étape 110 à la quatrième étape 140 peuvent être répétées N fois de façon à former N rangées de cellules 18 selon la deuxième direction A2.

**Le** procédé 100 comprend une cinquième étape 150 consistant à chauffer le panneau acoustique 12, notamment lorsque le premier feuillard 20, le deuxième feuillard 22 et le troisième feuillard 30 sont réalisés dans un matériau thermodurcissable. Le chauffage des feuillards permet une polymérisation des feuillards permettant la fixation des feuillards entre eux. L'étape v peut être réalisée avec les feuillards disposés sur un outillage présentant une courbure de manière à conférer une courbure aux feuillards et donc au panneau acoustique.

Alternativement, lorsque chaque premier feuillard 20 et deuxième feuillard 22 est réalisé en un matériau métallique, la cinquième étape 250 peut consister réticuler un adhésif déposé entre chaque troisième feuillard 30 et le premier feuillard 20 adjacent et entre chaque troisième et le deuxième feuillard 22 adjacent, par exemple en chauffant le panneau acoustique 12 formé. Le procédé 100 peut ainsi comprendre une étape subsidiaire consistant à déposer une couche d'adhésif de chaque côté du troisième feuillard 30 dans la deuxième direction A2. Cette étape subsidiaire peut notamment être réalisée entre la deuxième étape 120 et la troisième étape 130.

L'invention ne se limite pas aux seuls exemples décrits précédemment et est susceptible de nombreuses variantes.

Selon une variante non représentée, le passage 36 délimité par chaque languette 34 est une ouverture à contours fermés formée dans la languette 34. Ainsi, chaque bord d'extrémité de chaque languette 34 est jointif, dans la deuxième direction A2, avec l'une parmi la première 20a crête du premier feuillard 20 et la première crête 22a du deuxième feuillard 22 délimitant la cellule 18 associée.

Selon une variante non représentée, le troisième feuillard 30 comprend trois, ou plus, languettes 34 s'étendant à l'intérieur de l'une des cellules 18, transversalement à la troisième direction A3 de la cellule 18. Les passages 36 délimités en tout ou partie par deux languettes 34 adjacentes dans la troisième direction A3 sont décalés l'un par rapport à l'autre dans une direction transverse à la troisième direction A3.

## Revendications

1. Panneau acoustique (12) pour turbomachine, le panneau acoustique (12) comprenant au moins :
- un premier feuillard (20) et un deuxième feuillard (22) ondulés comprenant chacun une alternance, selon une première direction (A1), de premières crêtes (20a, 22a) et secondes crêtes (20b, 22b) reliées par des flancs (20f, 22f), ledit premier feuillard (20) et ledit deuxième feuillard (22) étant rapportés l'un par rapport à l'autre selon une deuxième direction (A2) transverse à la première direction (A1), de sorte à former une pluralité de cellules (18) qui sont chacune délimitée, dans la deuxième direction (A2), par une première crête (20a) du premier feuillard (20) et une première crête (22a) du deuxième feuillard (22), chaque cellule s'étendant selon une troisième direction (A3) transverse à la première direction (A1) et à la deuxième direction (A2),
- un troisième feuillard (30) intercalé, dans la deuxième direction (A2), entre le premier feuillard (20) et le deuxième feuillard (22), le troisième feuillard (30) comprenant une première paroi latérale (32) en appui, dans la deuxième direction (A2), sur le premier feuillard (20), le troisième feuillard (30) comprenant en outre au moins une languette (34) qui s'étend à l'intérieur de l'une des cellules (18), au moins en partie transversalement à la troisième direction (A3) de la cellule associée, ladite au moins une languette (34) étant reliée, à un premier bord d'extrémité dans la deuxième direction (A2), à la première paroi latérale (32), ladite au moins une languette (34) délimitant tout ou partie d'un passage (36) dans la troisième direction (A3) à l'intérieur de la cellule associée le panneaux acoustique étant **caractérisé en ce que** le troisième feuillard (30) comprend une pluralité de languettes (34) décalées l'une de l'autre dans la troisième direction (A3) de la cellule (18) associée, et **en ce que** les passages (36) délimités en tout ou partie par une première languette (34) et une seconde languette (34) consécutives dans la troisième direction (A3) sont décalés l'un de l'autre dans une direction transverse à la troisième direction (A3) de la cellule (18) associée.

2. Panneau acoustique (12) selon la revendication 1, dans lequel le passage (36) est délimité par un bord libre de la languette (34) et l'une parmi la première crête (20a) du premier feuillard (20) et la première crête (22a) du deuxième feuillard (22), délimitant la cellule (18) associée.

3. Panneau acoustique (12) selon la revendication 1, dans lequel le passage (36) est une ouverture à contours fermés formée dans la languette (34).

4. Panneau acoustique (12) selon l'une quelconque des revendications précédentes, dans lequel chaque cellule (18) présente une section transversale à la troisième direction (A3) associée qui est hexagonale, et dans lequel ladite au moins une languette (34) comprend une partie centrale (34a) qui s'étend, dans la deuxième direction (A2), entre les premières crêtes (20a, 22a) du premier feuillard (20) et du deuxième feuillard (22), qui délimitent la cellule (18) associée, et deux parties latérales (34b) qui s'étendent chacune, dans la deuxième direction (A2), entre des flancs (20f, 22f) du premier feuillard (20) et du deuxième feuillard (22), en vis-à-vis dans la deuxième direction (A2), qui délimitent la cellule associée.

5. Panneau acoustique (12) selon l'une quelconque des revendications précédentes, dans lequel la première paroi latérale (32) du troisième feuillard (30) comprend une alternance, dans la première direction (A1), de premières crêtes (32a) et de secondes crêtes (32b) reliées par des flancs (32f), chaque première crête (32a) et seconde crête (32b) de la première paroi latérale (32) étant respectivement en appui, dans la deuxième direction (A2), sur l'une des premières crêtes (20a) et l'une des secondes crêtes (20b) du premier feuillard (20).

6. Panneau acoustique (12) selon l'une quelconque des revendications précédentes, le troisième feuillard (30) comprenant en outre une seconde paroi latérale (38) en appui, selon la deuxième direction (A2), sur le deuxième feuillard (22), ladite au moins une languette (34) étant reliée, à un second bord d'extrémité dans la deuxième direction (A2), à la seconde paroi latérale (38).

7. Panneau acoustique (12) selon l'une quelconque des revendications précédentes, dans lequel chaque seconde crête (32b) de la première paroi latérale (32) du troisième feuillard (30), et le cas échéant chaque seconde crête (38b) de la seconde paroi latérale (38) du troisième feuillard (30), est serrée dans la deuxième direction (A2) entre l'une des secondes crêtes (20b) du premier feuillard (20) et l'une des secondes crêtes (22b) du deuxième feuillard (22).

8. Procédé de fabrication (100) d'un panneau acoustique (12) selon l'une quelconque des revendications précédentes, comprenant les étapes :
i fournir le premier feuillard (20) et le deuxième feuillard (22) ondulés comprenant chacun la pluralité de premières crêtes (20a, 22a) et de secondes crêtes (20b,22b) reliées par des flancs (20f, 22f),
ii fournir le troisième feuillard (30) comprenant ladite au moins une languette (34),
iii positionner la première paroi latérale (32) du troisième feuillard (30) en appui sur le premier feuillard (20) selon la deuxième direction (A2),
iv rapporter le deuxième feuillard (22) au premier feuillard (20) pour former la pluralité de cellules (18), avec le troisième feuillard (30) intercalé, dans la deuxième direction (A2), entre le premier feuillard (20) et le deuxième feuillard (22), ladite au moins une languette (34) s'étendant à l'intérieur de l'une des cellules (18),
dans lequel le premier feuillard (20), le deuxième feuillard (22) et le troisième feuillard (30) sont préformés avant les étapes iii et iv.

9. Procédé (100) de fabrication selon la revendication 8, les revendications 5 et 6 s'appliquant, dans lequel l'étape ii comporte les étapes subsidiaires :
a2 fournir un troisième feuillard (30) ayant une forme plane,
b2 former les lignes de pliage (J, M) délimitant chaque première crête (32a, 38a) et deuxième crête (32b, 38b) de la première paroi latérale (32) et de la seconde paroi latérale (38) du troisième feuillard (30),
c2 former au moins une paire (K) de lignes de pliage (K1, K2) sur le troisième feuillard (30), chaque ligne de pliage (K1, K2) de ladite paire (K) délimitant l'un des bords d'extrémité dans la deuxième direction (A2) de ladite au moins une languette (34), les lignes de pliage (K1, K2) de ladite paire (K) étant jointes au niveau de chaque première crête (32a, 38a) de la première paroi latérale (32) et de la seconde paroi latérale (38),
d2 faire une découpe dans le troisième feuillard (30) destinée à former le passage (36) délimité en tout ou partie par ladite au moins une languette (34),
e2 plier la première paroi latérale (32) et la seconde paroi latérale (38) de sorte à de sorte à ce qu'elles présentent chacune une forme ondulée avec une alternance de premières crêtes (32a, 38a) et de secondes crêtes (32b, 38b) reliées par des flancs (32f, 38f),
f2 plier ladite au moins une languette (34) par rapport à la première paroi latérale (32),
g2 plier la seconde paroi latérale (38) par rapport à ladite au moins une languette (34) et à la première paroi latérale (32) de sorte à ce que chaque seconde crête (38b) de la seconde paroi latérale (38) soit en regard de l'une des secondes crêtes (32b) de la première paroi latérale (32).

10. Procédé selon la revendication précédente, dans lequel les étapes e2, g2 et f2 sont réalisées par une plieuse automatique.

## Patentansprüche

1. Akustikplatte (12) für eine Turbomaschine bzw. ein Turbotriebwerk, wobei die Akustikplatte (12) zumindest umfasst:
- ein erstes Band (20) und ein zweites Band (22), die gewellt ausgebildet sind und jeweils in einer ersten Richtung (A1) abwechselnd erste Scheitel (20a, 22a) und zweite Scheitel (20b, 22b) aufweisen, die durch Flanken (20f, 22f) verbunden sind, wobei das erste Band (20) und das zweite Band (22) in einer quer zur ersten Richtung (A1) verlaufenden zweiten Richtung (A2) aneinander gesetzt sind, so dass eine Vielzahl von Zellen (18) entsteht, die jeweils in der zweiten Richtung (A2) von einem ersten Scheitel (20a) des ersten Bandes (20) und einem ersten Scheitel (22a) des zweiten Bandes (22) eingegrenzt sind, wobei sich jede Zelle in einer dritten Richtung (A3) quer zur ersten Richtung (A1) und zur zweiten Richtung (A2) erstreckt,
- ein drittes Band (30), das in der zweiten Richtung (A2) zwischen dem ersten Band (20) und dem zweiten Band (22) eingefügt ist, wobei das dritte Band (30) eine erste Seitenwand (32) umfasst, die in der zweiten Richtung (A2) am dem ersten Band (20) anliegt, wobei das dritte Band (30) ferner zumindest eine Lasche (34) umfasst, die sich innerhalb einer der Zellen (18) zumindest teilweise quer zur dritten Richtung (A3) der zugehörigen Zelle erstreckt, wobei die zumindest eine Lasche (34) an einer ersten Endkante in der zweiten Richtung (A2) mit der ersten Seitenwand (32) verbunden ist, wobei die zumindest eine Lasche (34) einen Durchgang (36) in der dritten Richtung (A3) im Inneren der zugehörigen Zelle ganz oder teilweise eingrenzt,
wobei die Akustikplatte (12) **dadurch gekennzeichnet ist, dass** das dritte Band (30) eine Vielzahl von Laschen (34) umfasst, die in der dritten Richtung (A3) der zugehörigen Zelle (18) gegeneinander versetzt sind, und dass die Durchgänge (36), die ganz oder teilweise von einer ersten Lasche (34) und einer zweiten Lasche (34), die in der dritten Richtung (A3) aufeinander folgen, eingegrenzt sind, in einer Richtung quer zur dritten Richtung (A3) der zugehörigen Zelle (18) gegeneinander versetzt sind.

2. Akustikplatte (12) nach Anspruch 1,
wobei der Durchgang (36) von einer freien Kante der Lasche (34) und einem aus erstem Scheitel (20a) des ersten Bandes (20) und erstem Scheitel (22a) des zweiten Bandes (22) eingegrenzt ist, wodurch die zugehörige Zelle (18) eingegrenzt ist.

3. Akustikplatte (12) nach Anspruch 1,
wobei der Durchgang (36) eine Öffnung mit geschlossenen Konturen ist, die in der Lasche (34) ausgebildet ist.

4. Akustikplatte (12) nach einem der vorhergehenden Ansprüche,
wobei jede Zelle (18) in der zugehörigen dritten Richtung (A3) einen sechseckförmigen Querschnitt aufweist und wobei die zumindest eine Lasche (34) einen Mittelabschnitt (34a) umfasst, der sich in der zweiten Richtung (A2) zwischen den die zugehörige Zelle (18) eingrenzenden ersten Scheiteln (20a, 22a) des ersten Bandes (20) und des zweiten Bandes (22) erstreckt, sowie zwei Seitenabschnitte (34b), die sich jeweils in der zweiten Richtung (A2) zwischen in der zweiten Richtung (A2) einander gegenüberliegenden Flanken (20f, 22f) des ersten Bandes (20) und des zweiten Bandes (22) erstrecken, die die zugehörige Zelle eingrenzen.

5. Akustikplatte (12) nach einem der vorhergehenden Ansprüche,
wobei die erste Seitenwand (32) des dritten Bandes (30) in der ersten Richtung (A1) abwechselnd erste Scheitel (32a) und zweite Scheitel (32b) aufweist, die durch Flanken (32f) verbunden sind, wobei jeder erste Scheitel (32a) und jeder zweite Scheitel (32b) der ersten Seitenwand (32) in der zweiten Richtung (A2) jeweils an einem der ersten Scheitel (20a) und einem der zweiten Scheitel (20b) des ersten Bandes (20) anliegen.

6. Akustikplatte (12) nach einem der vorhergehenden Ansprüche,
wobei das dritte Band (30) ferner eine zweite Seitenwand (38) umfasst, die in der zweiten Richtung (A2) an dem zweiten Band (22) anliegt, wobei die zumindest eine Lasche (34) an einer zweiten Endkante in der zweiten Richtung (A2) mit der zweiten Seitenwand (38) verbunden ist.

7. Akustikplatte (12) nach einem der vorhergehenden Ansprüche,
wobei jeder zweite Scheitel (32b) der ersten Seitenwand (32) des dritten Bandes (30) und gegebenenfalls jeder zweite Scheitel (38b) der zweiten Seitenwand (38) des dritten Bandes (30) in der zweiten Richtung (A2) zwischen einem der zweiten Scheitel (20b) des ersten Bandes (20) und einem der zweiten Scheitel (22b) des zweiten Bandes (22) eingeklemmt ist.

8. Verfahren (100) zur Herstellung einer Akustikplatte (12) nach einem der vorhergehenden Ansprüche, umfassend die Schritte:
i Bereitstellen des ersten Bandes (20) und des zweiten Bandes (22), die gewellt ausgebildet sind und jeweils eine Vielzahl von ersten Scheiteln (20a, 22a) und zweiten Scheiteln (20b, 22b) umfassen, die durch Flanken (20f, 22f) verbunden sind,
ii Bereitstellen des dritten Bandes (30), das die zumindest eine Lasche (34) umfasst,
iii Positionieren der ersten Seitenwand (32) des dritten Bandes (30) in Anlage an das erste Band (20) entlang der zweiten Richtung (A2),
iv Ansetzen des zweiten Bandes (22) an das erste Band (20), um die Vielzahl von Zellen (18) zu bilden, wobei das dritte Band (30) in der zweiten Richtung (A2) zwischen dem ersten Band (20) und dem zweiten Band (22) eingefügt ist, wobei sich die zumindest eine Lasche (34) in eine der Zellen (18) hinein erstreckt,
wobei das erste Band (20), das zweite Band (22) und das dritte Band (30) vor den Schritten iii und iv vorgeformt werden.

9. Herstellungsverfahren (100) nach Anspruch 8, rückbezogen auf die Ansprüche 5 und 6,
wobei Schritt ii die folgenden Unterschritte umfasst:
a2 Bereitstellen eines dritten Bandes (30) mit einer flachen Form,
b2 Ausbilden der Biegelinien (J, M), die jeden ersten Scheitel (32a, 38a) und jeden zweiten Scheitel (32b, 38b) der ersten Seitenwand (32) und der zweiten Seitenwand (38) des dritten Bandes (30) eingrenzen,
c2 Ausbilden zumindest eines Paares (K) von Biegelinien (K1, K2) an dem dritten Band (30), wobei jede Biegelinie (K1, K2) des Paares (K) eine der Endkanten in der zweiten Richtung (A2) der zumindest einen Lasche (34) eingrenzt, wobei die Biegelinien (K1, K2) des Paares (K) im Bereich jedes ersten Scheitels (32a, 38a) der ersten Seitenwand (32) und der zweiten Seitenwand (38) verbunden sind,
d2 Einbringen eines Schnitts in das dritte Band (30), der dazu bestimmt ist, den Durchgang (36) zu bilden, der ganz oder teilweise von der zumindest einen Lasche (34) eingegrenzt ist,
e2 Biegen der ersten Seitenwand (32) und der zweiten Seitenwand (38) so, dass sie jeweils eine Wellenform mit abwechselnden ersten Scheiteln (32a, 38a) und zweiten Scheiteln (32b, 38b) aufweisen, die durch Flanken (32f, 38f) verbunden sind,
f2 Biegen der zumindest einen Lasche (34) in Bezug auf die erste Seitenwand (32),
g2 Biegen der zweiten Seitenwand (38) in Bezug auf die zumindest eine Lasche (34) und die erste Seitenwand (32) so, dass jeder zweite Scheitel (38b) der zweiten Seitenwand (38) einem der zweiten Scheitel (32b) der ersten Seitenwand (32) gegenüberliegt.

10. Verfahren nach dem vorhergehenden Anspruch,
wobei die Schritte e2, g2 und f2 durch eine automatische Biegemaschine ausgeführt werden.

## Claims

1. An acoustic panel (12) for a turbine engine, the acoustic panel (12) comprising at least:
- a first strip (20) and a second strip (22), corrugated, each comprising an alternation, according to a first direction (A1), first ridges (20a, 22a) and second ridges (20b, 22b) connected by sidewalls (20f, 22f), said first strip (20) and said second strip (22) being joined to each other according to a second direction (A2) transverse to the first direction (A1), so as to form a plurality of cells (18) each delimited, in the second direction (A2), by a first ridge (20a) of the first strip (20) and a first ridge (22a) of the second strip (22), each cell extending according to a third direction (A3) transverse to the first direction (A1) and to the second direction (A2),
- a third strip (30) interposed, in the second direction (A2), between the first strip (20) and the second strip (22), the third strip (30) comprising a first lateral wall (32) bearing, in the second direction (A2), on the first strip (20), the third strip (30) further comprising at least one tab (34) which extends inside one of the cells (18), at least partially transversely to the third direction (A3) of the associated cell, said at least one tab (34) being connected, at a first end edge in the second direction (A2), to the first lateral wall (32), said at least a tab (34) delimiting all or part of a passage (36) in the third direction (A3) inside the associated cell,
the acoustic panel being **characterized in that** the third strip (30) comprises a plurality of tabs (34) offset from each other in the third direction (A3) of the associated cell (18), and **in that** the passages (36) totally or partially delimited by consecutive first tab (34) and second tab (34) in the third direction (A3) are offset from each other in a direction transverse to the third direction (A3) of the associated cell (18).

2. The acoustic panel (12) according to claim 1, wherein the passage (36) is delimited by a free edge of the tab (34) and one amongst the first ridge (20a) of the first strip (20) and the first ridge (22a) of the second strip (22), delimiting the associated cell (18).

3. The acoustic panel (12) according to claim 1, wherein the passage (36) is an opening with closed contours formed in the tab (34).

4. The acoustic panel (12) according to any one of the preceding claims, wherein each cell (18) has a section transverse to the associated third direction (A3) which is hexagonal, and wherein said at least one tab (34) comprises a central portion (34a) which extends, in the second direction (A2), between the first ridges (20a, 22a) of the first strip (20) and of the second strip (22), which delimit the associated cell (18), and two lateral portions (34b) each extending, in the second direction (A2), between sidewalls (20f, 22f) of the first strip (20) and of the second strip (22), opposite one another in the second direction (A2), which delimit the associated cell.

5. The acoustic panel (12) according to any one of the preceding claims, wherein the first lateral wall (32) of the third strip (30) comprises an alternation, in the first direction (A1), of first ridges (32a) and second ridges (32b) connected by sidewalls (32f), each first ridge (32a) and second ridge (32b) of the first lateral wall (32) respectively bearing, in the second direction (A2), on one of the first ridges (20a) and one of the second ridges (20b) of the first strip (20).

6. The acoustic panel (12) according to any one of the preceding claims, the third strip (30) further comprising a second lateral wall (38) bearing, according to the second direction (A2), on the second strip (22), said at least one tab (34) being connected, at a second end edge in the second direction (A2), to the second lateral wall (38).

7. The acoustic panel (12) according to any one of the preceding claims, wherein each second ridge (32b) of the first lateral wall (32) of the third strip (30), and where appropriate each second ridge (38b) of the second lateral wall (38) of the third strip (30), is clamped in the second direction (A2) between one of the second ridges (20b) of the first strip (20) and one of the second ridges (22b) of the second strip (22).

8. A method for manufacturing (100) an acoustic panel (12) according to any one of the preceding claims, comprising the steps of:
i providing the corrugated first strip (20) and second strip (22) each comprising the plurality of first ridges (20a, 22a) and second ridges (20b, 22b) connected by sidewalls (20f, 22f),
ii providing the third strip (30) comprising said at least one tab (34),
iii positioning the first lateral wall (32) of the third strip (30) bearing on the first strip (20) according to the second direction (A2),
iv joining the second strip (22) to the first strip (20) to form the plurality of cells (18), with the third strip (30) interposed, in the second direction (A2), between the first strip (20) and the second strip (22), said at least one tab (34) extending inside one of the cells (18)
Wherein the first strip (20), the second strip (22) and the third strip (30) are preformed before steps iii) and iv).

9. The manufacturing method (100) according to claim 8, claims 5 and 6 applying, wherein step ii includes the subsidiary steps:
a2 providing a third strip (30) having a planar shape,
b2 forming the bend lines (J, M) delimiting each first ridge (32a, 38a) and second ridge (32b, 38b) of the first lateral wall (32) and of the second lateral wall (38) of the third strip (30),
c2 forming at least one pair (K) of bend lines (K1, K2) on the third strip (30), each bend line (K1, K2) of said pair (K) delimiting one of the end edges in the second direction (A2) of said at least one tab (34), the bend lines (K1, K2) of said pair (K) being joined at each first ridge (32a, 38a) of the first lateral wall (32) and of the second lateral wall (38),
d2 making a cutout in the third strip (30) intended to form the passage (36) delimited totally or partially by said at least one tab (34),
e2 bending the first lateral wall (32) and the second lateral wall (38) so that each has a corrugated shape with an alternation of first ridges (32a, 38a) and second ridges (32b, 38b) connected by sidewalls (32f, 38f),
f2 bending said at least one tab (34) with respect to the first lateral wall (32),
g2 bending the second lateral wall (38) with respect to said at least one tab (34) and to the first lateral wall (32) so that each second ridge (38b) of the second lateral wall (38) is opposite one of the second ridges (32b) of the first lateral wall (32).

10. The method according to the preceding claim, wherein steps e2, g2 and f2 are carried out by an automatic press brake.
